# EUROPEAN PATENT APPLICATION

(11) **EP 1 947 329 A1**
(43) Date of publication of application: **23.07.2008**
(21) Application number: 07100770.2
(22) Date of filing: 18.01.2007
(51) Int. Cl.: F03D 7/04, F03D 11/00, F03D 11/02, F03D 11/04

(54) **Wind turbine and method for mitigating the asymmetric loads endured by the rotor or the wind turbine**

(71) Applicant: Ecotecnia Energias Renovables S.L., 08005 Barcelona (ES)
(72) Inventor: Santos, Richard Arsenio, 08005 Barcelona (ES); Prats Mustarós, Josep, 08005 Barcelona (ES)
(74) Representative: Barlocci, Anna

(57) **Abstract**

A wind turbine comprises a rotor (10), a rotor hub (100), a transducer for measuring a displacement of a component of the turbine structure caused by asymmetric loads acting on the rotor, and a fixed supporting shaft (105) which supports the rotor at the rotor hub. Said transducer comprises at least one strain-gauge sensor arranged for measuring a deformation of the fixed supporting shaft due to asymmetric loads acting on the rotor. A computation system receives signals from one or more sensors and, based on the value of said signals, calculates at least one component of the asymmetric loads. The computation system commands actuators for individually setting the pitch of each blade of the turbine, in order to mitigate the asymmetric loads endured by the rotor.

## Description

The present invention relates to a wind turbine comprising a rotor, a rotor hub, and a transducer for measuring a displacement of a component of the turbine structure caused by asymmetric loads acting on the rotor. The invention relates also to a method for mitigating the asymmetric loads endured by the rotor of the wind turbine.

### BACKGROUND ART

Wind turbines have a rotor which comprises one or more blades that are rotated by the incoming wind flow. Vertical and horizontal wind shears, yaw misalignment and turbulence may produce asymmetric loads across the rotor. Asymmetric loads acting on the rotor add up to the mechanical fatigue loads endured by structural components of the turbine, which may result in a shorter than expected lifetime for the turbine. Thus there is an interest in mitigating these asymmetric loads.

It has been thought to measure asymmetric loads by taking displacement measures on fixed elements of the turbine, but this has not been considered promising because either these displacements are too small or it is difficult to ascertain whether they are exclusively due to asymmetric loads.

It is known to measure asymmetric loads by placing sensors at the root of the blades. Another approach is based on measuring the deflection of the low-speed shaft of the wind turbine due to asymmetric loads. Specifically, asymmetric loads cause bending moments in the rotor blades that are then transferred to the rotating low-speed shaft. As a result, this shaft deflects with respect to its non-loaded condition.

Patent application WO 2005/010358 discloses measuring the radial displacement of the low-speed shaft by means of sensors, and using this measurement to control the blade pitch in order to mitigate the asymmetric loads acting on the rotor. The measurements on the low-speed shaft are taken when each blade passes through a certain position (i.e., are cyclical) because they are taken on a rotating shaft; this makes them complicated.

Besides, since the measurements are taken on an element with movement relative to a fixed reference frame, they require further mathematical transformations (e.g., a Coleman transformation) in order to be useful for feedback control, because the measurements that are useful for feedback control are the asymmetric wind loads in a non-rotating frame of reference, since the asymmetries in the wind are not rotating.

Moreover, in a traditional turbine the weight of the rotor is cantilevered on the low-speed shaft away from the hub support bearing. By measuring the bending moment at any point on the shaft between the bearing and the hub a sine wave signal is obtained, that represents the weight of the rotor multiplied by the horizontal distance from the measuring point to the centre of gravity of the rotor times the sine of the angle of rotation, to which any asymmetric wind loads are added. To measure the asymmetric loads, this sine wave associated to the weight of the rotor has to be removed. This is easy if the rotor is not moving, but if it moves then there are inertial accelerations and loads that are considered noise on the signal and are impossible to remove from the signal.

### SUMMARY OF THE INVENTION

It is an object of the present invention to provide a way of mitigating the asymmetric loads acting on the wind turbine rotor that is simpler than the known systems.

According to one aspect of the invention, the wind turbine comprises a fixed supporting shaft which supports the rotor at the rotor hub, and the transducer comprises at least one sensor arranged for measuring a deformation of the fixed supporting shaft due to asymmetric loads acting on the rotor. Since the sensor is positioned on a fixed, non-rotating shaft, the eventual noise can be removed from the signal provided by the sensor.

When the sensor is positioned under the centre of gravity of the rotor, there is no bending moment due to the weight of the rotor and the sensor directly measures the pure asymmetric load, or at least one component of it. The signal from the sensor is then directly useful for feedback control.

Preferably, the transducer comprises at least two sensors, in order to detect both vertical and horizontal asymmetric loads.

Advantageously, at least one sensor is a stress sensor, the measured stress directly providing the bending moment due to asymmetric loads.

In an embodiment, at least one sensor is a strain-gauge sensor, but preferably the transducer comprises at least two strain-gauge sensors arranged on the fixed supporting shaft in such a way as to detect bending moments endured by the fixed supporting shaft due to asymmetric loads acting on the rotor.

In an embodiment, the transducer comprises two strain-gauge sensors, one sensor for measuring the vertical bending moment on the fixed supporting shaft and another sensor for measuring the horizontal bending moment on the fixed supporting shaft.

In an alternative embodiment, the sensors are arranged in such a way as to measure the thrust load on the turbine.

Preferably, the fixed supporting shaft has the shape of a surface of revolution. Thus, fewer sensors are necessary for measuring all the components of the asymmetric loads.

The wind turbine comprises a computation system that receives signals from the sensors and, based on the value of said signals, calculates at least one component of the asymmetric loads acting on the rotor.

In an embodiment, said computation system commands an actuator for setting the pitch of at least one blade of the turbine, but it preferably commands actuators for individually setting the pitch of each blade of the turbine. The computation system is able to control and reduce the asymmetric loads almost continuously.

According to another aspect of the invention, a method for mitigating the asymmetric loads endured by the rotor of a wind turbine comprises the step of measuring the stress caused on the fixed shaft by asymmetric loads acting on the rotor.

In an embodiment, said method comprises the step of calculating at least one component of said asymmetric loads.

In an embodiment, said method comprises the step of setting the pitch of at least one blade of the turbine in order to mitigate the asymmetric loads, but it preferably comprises the step of individually setting the pitch of each blade of the turbine.

### BRIEF DESCRIPTION OF THE DRAWINGS

Some particular embodiments of the present invention will be described in the following, only by way of non-limiting example, with reference to the appended drawings, in which:

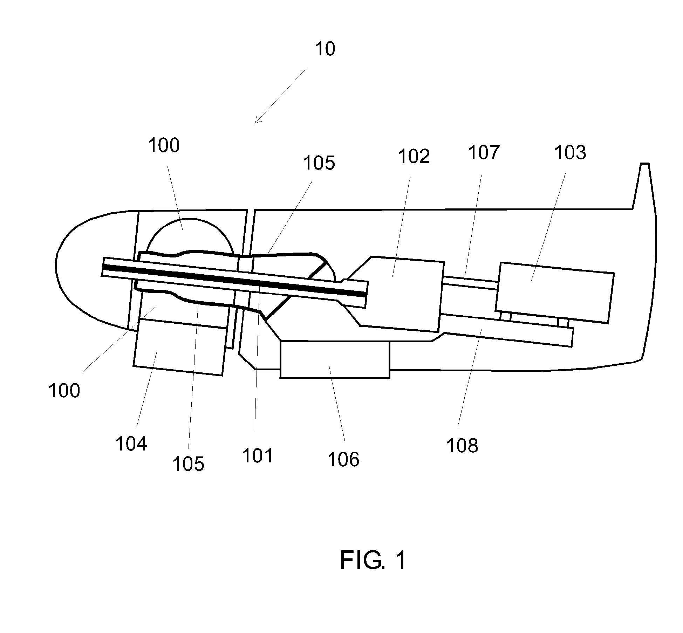

figure 1 is a schematic lateral view of some components in a wind turbine nacelle.

### DESCRIPTION OF PARTICULAR EMBODIMENTS

Figure 1 shows a wind turbine nacelle comprising a rotor 10, a gearbox 102, a generator 103, and a mainframe 108 which supports the gearbox and the generator. The rotor comprises a rotor hub 100 to which one or more blades are attached at their roots 104. The rotor transfers the rotation of the blades to a slow-speed rotating shaft 101 that drives the gearbox, which in turn transfers the torque, at a higher angular speed, to a high-speed shaft 107 that drives the generator.

A yaw system 106 transfers the mechanical loads from the rotor 10 and the mainframe 108 to the tower of the wind turbine. The yaw system provides for the alignment of the blades perpendicularly to the wind direction.

A fixed supporting shaft 105 is connected to the tower opposite the mainframe 108 and supports the rotor through the hub 100. The fixed supporting shaft 105 is hollow and the slow-speed shaft 101 runs through it.

In conventional wind turbines the slow-speed shaft itself supports the rotor, which means that it not only has to withstand the weight of the rotor but also the alternating bending moments due to asymmetric loads. Thus, the slow-speed shaft must be very strong and is normally made from a heavy forged piece.

In the present invention, the rotor is not supported by the slow-speed shaft 101 but by the fixed supporting shaft 105, and therefore the slow-speed shaft can be lighter as it has only to transfer the torque from the rotor.

In an embodiment, the fixed supporting shaft 105 is a cast piece, since it has only a supporting function and not a driving one.

The bending moments in the blades are reacted through the hub 100 and then transmitted through the rotor bearings to the fixed supporting shaft 105. The fixed supporting shaft is deflected in a manner that is proportional to said bending moments due to asymmetric loads. The deflection or deformation of the fixed supporting shaft may be measured by means of a sensor arrangement; the output of these sensors can then be used to determine the magnitude and the orientation of the resultant rotor load and to mitigate said load, or its asymmetric nature, by, for example, controlling the blade pitch.

The sensor arrangement constitutes, or is a part of, a transducer that converts the deformation of the fixed supporting shaft 105 into an electric signal representative of the rotor load. An electronic processor or, more generally, a computer having one or more such processors receives said signals and processes them into a calculation of the pitch increments which are to be actuated on each blade so as to reduce overall and asymmetric rotor loading. The whole process of measuring and controlling can take place seamlessly.

The computer may comprise an electronically-readable medium having stored thereon instructions that, when executed, cause a processor to accept the signals from the sensors and, based on the value of said signals, to calculate at least one component of the asymmetric loads acting on the rotor. Other such instructions can cause a processor to command an actuator for setting the pitch of at least one blade of the turbine, or to command actuators for individually setting the pitch of each blade of the turbine.

On the other hand, said electronically-readable medium may not be part of the computer and may be placed elsewhere, even at a distance from the wind turbine, and then the processor would be connected with the electronically-readable medium and would receive such instructions trough said connection.

The transducer may use sensor technologies based on electrical, acoustic, optical, magnetic, capacitive or inductive field effects. One sensor is needed for each asymmetric load component that is to be controlled. That is, for controlling only vertical or horizontal asymmetric loads just one senor is needed. Bur normally it will be convenient to control both the vertical and the horizontal component of the asymmetric loads, in which case two sensors are needed. In an embodiment the two sensors are placed orthogonally. Of course, more than two sensors may be used for making more reliable the control procedure.

In an embodiment, strain-gauge sensors are placed on the fixed supporting shaft 105 near the rotor hub 100 (by "near the rotor hub" it is meant approximately between the hub support bearings, i.e., close to the centre of gravity of the hub). The fixed supporting shaft has the shape of a surface of revolution and preferably two orthogonal full bridge strain-gauge pairs are used to measure the vertical and horizontal components of the asymmetric loads.

The strain-gauge sensors measure stresses in the fixed supporting shaft 105 (they really measure strains with respect to the reference of the unstrained element, but stresses are readily derived from strains) and are arranged in such a way as to be only sensitive to bending moments. Thus, the strain-gauge sensors directly measure the bending moments due to asymmetric loads acting on the rotor, and no Coleman or similar transformation is needed.

As has been hinted, the results are improved if the fixed supporting shaft 105 has the shape of a surface of revolution whose axis intersects the centre of gravity of the rotor, because then the bending moments due to the weight of the rotor are zero, and the measured loads are just the asymmetric loads acting on the rotor. Otherwise, there would be an offset to the signal that represents the weight of the rotor and a noise overlapped to the signal due to the inertia of the rotor.

The processor can be set to control other states than the blade pitch, like for instance the yaw position. Or, for example, the sensors can be arranged to measure the thrust load on the wind turbine. These are functions not easily performed in turbines without a fixed supporting shaft.

Although only particular embodiments of the invention have been shown and described in the present specification, the skilled man will be able to introduce modifications and substitute any technical features thereof with others that are technically equivalent, depending on the particular requirements of each case, without departing from the scope of protection defined by the appended claims.

For example, although it is preferred to place the sensors near the hub, they can be placed anywhere on the fixed supporting shaft. Or the two measured components of the asymmetric loads need not be orthogonal neither vertical and horizontal.

## Claims

1. A wind turbine comprising a rotor (10), a rotor hub (100), and a transducer for measuring a displacement of a component of the turbine structure caused by asymmetric loads acting on the rotor, **characterized in that** it also comprises a fixed supporting shaft (105) which supports the rotor at the rotor hub (100), and **in that** said transducer comprises at least one sensor arranged for measuring a deformation of the fixed supporting shaft (105) due to asymmetric loads acting on the rotor.

2. A wind turbine according to claim 1, wherein the transducer comprises at least two sensors, in order to detect both vertical and horizontal asymmetric loads.

3. A wind turbine according to any of the preceding claims, wherein at least one sensor is a stress sensor.

4. A wind turbine according to claim 3, wherein at least one sensor is a strain-gauge sensor.

5. A wind turbine according to claim 4, wherein the transducer comprises at least two strain-gauge sensors arranged on the fixed supporting shaft (105) in such a way as to detect bending moments endured by the fixed supporting shaft due to asymmetric loads acting on the rotor.

6. A wind turbine according to claim 5, wherein the transducer comprises two strain-gauge sensors, one sensor for measuring the vertical bending moment on the fixed supporting shaft (105) and another sensor for measuring the horizontal bending moment on the fixed supporting shaft (105).

7. A wind turbine according to any of the preceding claims, wherein the sensors are arranged in such a way as to measure the thrust load on the turbine.

8. A wind turbine according to any of the preceding claims, wherein the fixed supporting shaft (105) has the shape of a surface of revolution.

9. A wind turbine according to any of the preceding claims, which comprises a computation system that receives signals from the sensors and, based on the value of said signals, calculates at least one component of the asymmetric loads acting on the rotor.

10. A wind turbine according to claim 9, wherein said computation system commands an actuator for setting the pitch of at least one blade of the turbine.

11. A wind turbine according to claim 9 or 10, wherein said computation system commands actuators for individually setting the pitch of each blade of the turbine.

12. A method for mitigating the asymmetric loads endured by the rotor (10) of a wind turbine which is provided with a fixed shaft (105) for supporting said rotor, comprising the step of measuring the stress caused on said fixed shaft by asymmetric loads acting on the rotor.

13. A method according to claim 12, which comprises the step of calculating at least one component of said asymmetric loads.

14. A method according to claim 12 or 13, which comprises the step of setting the pitch of at least one blade of the turbine in order to mitigate the asymmetric loads.

15. A method according to any of claims claim 12 to 14, which comprises the step of individually setting the pitch of each blade of the turbine.
